# EUROPÄISCHE PATENTANMELDUNG

(11) **EP 1 017 147 A2**
(43) Veröffentlichungstag der Anmeldung: **05.07.2000**
(21) Anmeldenummer: 99125385.7
(22) Anmeldetag: 20.12.1999
(51) Int. Cl.: H02J 3/38, H02M 5/458

(54) **Anordnung zur Einspeisung von elektrischem Strom in ein 3-phasiges Stromnetz**

(30) Priorität: 30.12.1998 DE 19861015
(71) Anmelder: Frisia Steuerungen GmbH, 32427 Minden (DE)
(72) Erfinder: Hennchen, Norbert, Dipl.Phys., 28239 Bremen (DE)
(74) Vertreter: Braun, Dieter, Dipl.-Ing.

(57) **Zusammenfassung**

Beschrieben wird eine Anordnung (1) zur Einspeisung von elektrischem Strom in ein 3-phasiges Stromnetz (2), insbesondere zur Einspeisung des von einer Windkraftanlage erzeugten Stroms, mit einem Generator (3), einem Gleichrichter (5) und einem Netzumrichter (8) sowie einem zwischen dem Gleichrichter (5) und dem Netzumrichter (8) angeordneten, von Kondensatoren (6) gebildeten Zwischenkreis (7). Die Erfindung ist im wesentlichen dadurch gekennzeichnet, daß der Zwischenkreis (7) spannungsmäßig geteilt und der Mittelpunkt (7a) des Zwischenkreises (7) geerdet ist. Es wird so wird erreicht, daß ein sehr großer Anteil der gesamten Anordnung (1) eine für hohe Frequenzen niedrige Impedanz zur Erde aufweist und deshalb nur eine sehr geringe elektromagnetische Abstrahlung hervorrufen kann.

## Beschreibung

Die Erfindung betrifft eine Anordnung zur Einspeisung von elektrischem Strom in ein 3-phasiges Stromnetz, insbesondere zur Einspeisung des von einer Windkraftanlage erzeugten Stroms, mit einem Generator, einem Gleichrichter und einem Netzumrichter sowie einem zwischen dem Gleichrichter und dem Netzumrichter angeordneten, von Kondensatoren gebildeten Zwischenkreis.

Bei den bekannten Anlagen gemäß dem Gattungsbegriff ist es nachteilig, daß große hochfrequente Spannungsschwankungen auftreten, aus denen eine unerwünschte hohe elektromagnetische Abstrahlung resultiert.

Der Erfindung liegt die Aufgabe zugrunde, den genannten Nachteil zu beseitigen und eine Anordnung zur Einspeisung von elektrischem Strom in ein 3-phasiges Stromnetz zu schaffen, die sich durch eine geringe elektromagnetische Abstrahlung und eine Verringerung der leitungsgebundenen Störungen auszeichnet.

Diese Aufgabe wird durch die Merkmale des Anspruchs 1 gelöst. Die weitere Ausgestaltung der Erfindung ist den Unteransprüchen zu entnehmen.

Da der Zwischenkreis spannungsmäßig geteilt und der Mittelpunkt des Zwischenkreises geerdet ist, wird erreicht, daß ein sehr großer Anteil der gesamten Anordnung eine für hohe Frequenzen niedrige Impedanz zur Erde aufweist und deshalb nur eine sehr geringe elektromagnetische Abstrahlung hervorrufen kann.

Vorzugsweise ist der Generator als 6-phasiger Synohrongenerator mit einer Phasenverschiebung von 60° ausgebildet. Es wird so vermieden, daß in einem 3-phasigen System eine sehr hohe Belastung des Erdleiters und der im Zwischenkreis angeordneten Kondensatoren durch die 3. Harmonische des Stromes auftritt.

Im Rahmen der Erfindung ist es weiterhin vorgesehen, daß der Generator eine Sternschaltung mit einem herausgeführten Sternpunkt aufweist.

Vorteilhaft ist es außerdem, wenn der Umrichter in jeder Stromphase zwei oder mehr von Transistoren oder Thyristoren gebildete Halbbrücken aufweist, die bezüglich der Schaltfrequenz phasenversetzt geschaltet werden. In weiterer Ausgestaltung ist es vorgesehen, daß der Netzumrichter in jeder Stromphase zwei Transistoren oder Thyristoren aufweist, die bezüglich der Schaltfrequenz um 180° phasenversetzt geschaltet werden. Dadurch heben sich die verbleibenden Anteile der Taktfrequenz im Strom durch die Drossel teilweise auf Das resultierende Signal hat zudem eine Oberschwingung mit der zweifachen Taktfrequenz und läßt sich dadurch einfacher filtern, da der Frequenzabstand zur Netzfrequenz größer ist als bei einer herkömmlichen Anordnung mit gleicher Taktfrequenz. Es wird so auch beim Umrichter eine deutliche Reduzierung der elektromagnetischen Abstrahlung erreicht.

Weiterhin ist es vorgesehen, daß die Mittelpunkte der Halbbrücken über einphasige Drosseln an das Stromnetz bzw. an einen vor dem Stromnetz angeordneten Transformator in Dyn Schaltung geführt sind. Vorzugsweise sind dabei die Wicklungslagen der einphasigen Drosseln durch Schirmwicklungen kapazitiv entkoppelt. Da die Wicklungslagen durch eine Schirmwicklung voneinander getrennt sind, wird eine kapazitive Kopplung zwischen den Wicklungslagen verhindert und die Filterwirkung der Drosseln insbesondere bei den hochfrequenten Anteilen des Stromes verbessert.

Vorteilhaft ist es zudem, wenn zwischen den einphasigen Drosseln und dem Stromnetz bzw. einem vor dem Stromnetz angeordneten Transformator in jeder Phase ein Filterkondensator angeordnet ist. Es wird so erreicht, daß die verbleibenden höherfrequenten Anteile des Stromes durch ein von der Serieninduktivität des Transformators und den Filterkondensatoren gebildetes Tiefpaß Filter gedämpft werden.

In der Zeichnung ist ein Ausführungsbeispiel der Erfindung dargestellt und wird im Folgenden näher beschrieben. Es zeigen:
Figur 1, ein Schaltbild einer erfindungsgemäßen Anordnung zur Einspeisung von elektrischem Strom in ein 3-phasiges Stromnetz;
Figur 2, eine der einphasigen Drosseln, über die die Mittelpunkte der Halbbrücken an das Stromnetz bzw. an einen vor dem Stromnetz angeordneten Transformator geführt sind, in vergrößerter schematischer Darstellung.

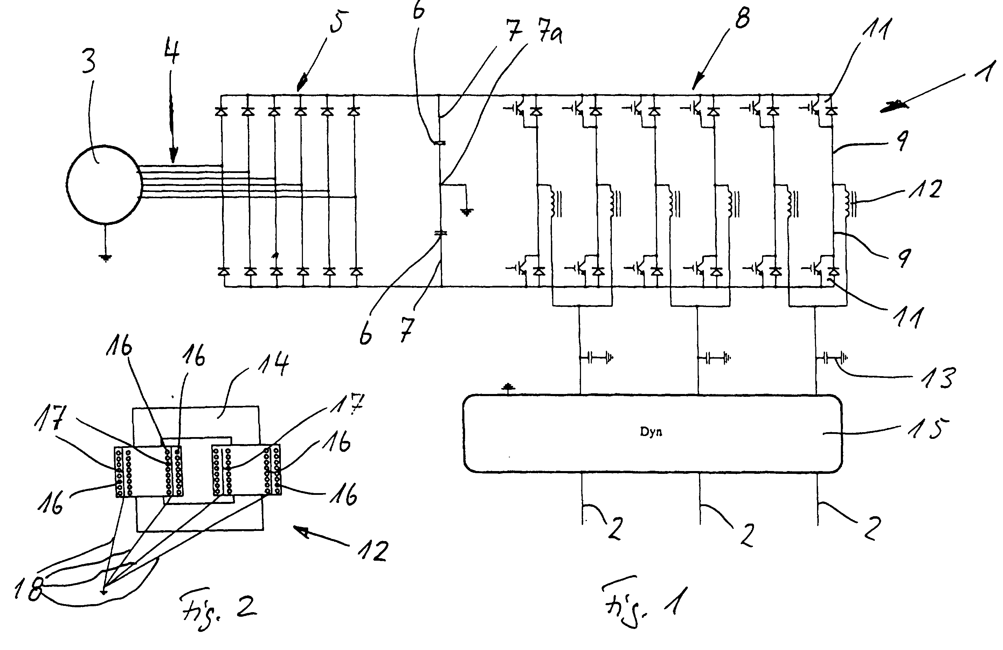

In der Figur 1 der Zeichnung ist mit 1 eine Anordnung zur Einspeisung von elektrischem Strom in ein 3-phasiges Stromnetz 2 bezeichnet. Die Anordnung 1 weist einen Generator 3 auf, der als 6-phasiger Synchrongenerator in Sternschaltung mit einem herausgeführten Sternpunkt ausgebildet ist. Die sechs Phasen 4 des Generators 3 haben eine Phasenverschiebung von je 60° elektrisch. Der Generator 3 ist so ausgelegt, daß er über einen großen Drehzahlbereich eine konstante Spannung liefern kann, wobei die Spannung über die Erregung geregelt wird.

Die Phasen 4 des Generators 3 sind an einen ungesteuerten 6-phasigen Gleichrichter 5 geführt. An den Gleichrichter 5 schließt sich ein von Kondensatoren 6 gebildeter symmetrischer Gleichspannungs-Zwischenkreis 7 an, dessen Mittelpunkt 7a geerdet ist.

Dem Gleichspannungs-Zwischenkreis 7 ist ein Umrichter 8 nachgeschaltet, der je Stromphase zwei Halbbrücken 9 mit Mittelpunkten 10 aufweist. In den Halbbrücken 9 sind Transistoren 11, beispielsweise IGBT oder Mosfet angeordnet. Anstelle der Transistoren 11 können ggf. auch Thyristoren vorgesehen sein. Die Transistoren 11 bzw. Thyristoren werden bezüglich der Schaltfrequenz um 180° phasenversetzt geschaltet. Gegebenenfalls ist es auch möglich, in jeder Phase drei oder mehr Halbbrücken 9 anzuordnen. Die Halbbrücken 9 werden auch dann zeitlich versetzt angesteuert. Die Verschiebung zur Taktfrequenz erfolgt um einen Wert, der sich wie folgt errechnet: 360°/Anzahl der Halbbrücken 9. Die resultierende Oberschwingung reduziert sich dadurch weiter, die Frequenz der resultierenden Oberschwingung ist im Verhältnis zur Taktfrequenz um das Vielfache der Anzahl der vorhandenen Halbbrücken 9 größer.

Die Mittelpunkte 10 der Halbbrücken 9 sind über einphasige Drosseln 12 und einen Filterkondensator 13 an einen vor einem Stromnetz 14 angeordneten Transformator 15 geführt. Es handelt sich hier um einen Netztransformator in Dyn Schaltung.

Die Drosseln 12 weisen Wicklungslagen 16 auf, die durch Schirmwicklungen 17 kapazitiv entkoppelt sind. Mittels der Schirmwicklungen 17 wird eine kapazitive Kopplung zwischen den Wicklungslagen 16 verhindert und die Filterwirkung der Drosseln 12 insbesondere bei den hochfrequenten Anteilen des Stromes verbessert. Die Filterkondensatoren 13 bilden zusammen mit der Serieninduktivität des Transformators 15 einen Tiefpaßfilter, der hohe Frequenzanteile des Stromes dämpft.

Die verbleibenden Anteile der Taktfrequenz im Strom heben sich durch die Anordnung der Drosseln 12 teilweise auf. Das resultierende Signal hat zudem eine Oberschwingung mit der zweifachen Taktfrequenz und läßt sich dadurch einfacher filtern, da der Frequenzabstand zur Netzfrequenz größer ist als bei einer herkömmlichen Anordnung mit gleicher Taktfrequenz. Mittels dieser Anordnung 1 ist es grundsätzlich möglich geworden, die elektromagnetische Abstrahlung und leitungsgebundene Störungen erheblich zu reduzieren. Außerdem ist es gelungen, Verluste in den Halbleitern durch Senkung der Schaltfrequenz zu verringern.

Zwischen dem Gleichrichter 5 und dem Umrichter 8 wird in an sich bekannter Weise ein Gleichspannungs-Zwischenkreis 7 aus Kondensatoren 6 angeordnet. Erfindungsgemäß wird dieser Gleichspannungs-Zwischenkreis 7 jedoch spannungsmäßig geteilt und dessen Mittelpunkt 7a geerdet. Dies hat zur Folge, daß ein sehr großer Anteil der gesamten Anordnung 1 für hohe Frequenzen eine niedrige Impedanz zur Erde aufweist und deshalb eine nur sehr geringe elektromagnetische Abstrahlung hervorrufen kann.

## Patentansprüche

**1.** Anordnung (1) zur Einspeisung von elektrischem Strom in ein 3-phasiges Stromnetz (2), insbesondere zur Einspeisung des von einer Windkraftanlage erzeugten Stroms, mit einem Generator (3), einem Gleichrichter (5) und einem Netzumrichter (8) sowie einem zwischen dem Gleichrichter (5) und dem Netzumrichter (8) angeordneten, von Kondensatoren (6) gebildeten Zwischenkreis (7), dadurch gekennzeichnet, daß der Zwischenkreis (7) spannungsmäßig geteilt und der Mittelpunkt (7a) des Zwischenkreises (7) geerdet ist.

**2.** Anordnung (1) nach Anspruch 1, dadurch gekennzeichnet, daß der Generator (3) als 6-phasiger Synchrongenerator mit einer Phasenverschiebung von 60° ausgebildet ist.

**3.** Anordnung (1) nach den Ansprüchen 1 und 2, dadurch gekennzeichnet, daß der Generator (3) eine Sternschaltung mit herausgeführtem Sternpunkt aufweist.

**4.** Anordnung (1) nach Anspruch 1, dadurch gekennzeichnet, daß der Netzumrichter (8) in jeder Stromphase zwei oder mehr von Transistoren (11) oder Thyristoren gebildete Halbbrücken (9) aufweist, die bezüglich der Schaltfrequenz phasenversetzt geschaltet werden.

**5.** Anordnung (1) nach Anspruch 4, dadurch gekennzeichnet, daß der Netzumrichter (8) in jeder Stromphase zwei Transistoren (11) oder Thyristoren aufweist, die bezüglich der Schaltfrequenz um 180° phasenversetzt geschaltet werden.

**7.** Anordnung (1) nach Anspruch 4, dadurch gekennzeichnet, daß die Mittelpunkte (10) der Halbbrücken (9) über einphasige Drosseln (12) an das Stromnetz bzw. an einen vor dem Stromnetz (2) angeordneten Transformator (15) in Dyn Schaltung geführt sind.

**8.** Anordnung (1) nach Anspruch 4, dadurch gekennzeichnet, daß die Wicklungslagen (16) der einphasigen Drosseln (12) durch Schirmwicklungen (17) kapazitiv entkoppelt sind.

**9.** Anordnung (1) nach Anspruch 1 und einem oder mehreren der weiteren Ansprüche, dadurch gekennzeichnet, daß zwischen den einphasigen Drosseln (12) und dem Stromnetz (2) bzw. einem vor dem Stromnetz (2) angeordneten Transformator (15) in jeder Phase ein Filterkondensator (13) angeordnet ist.
